Europäisches Patentamt

European Patent Office

Office européen des brevets

(11) Publication number: **0 233 412**
**A2**

## EUROPEAN PATENT APPLICATION

(21) Application number: 86310003.8

(51) Int. Cl.⁴: **G02B 6/04**

(22) Date of filing: 22.12.86

(30) Priority: 20.12.85 GB 8531429
27.01.86 GB 8601945
06.02.86 GB 8603018

(43) Date of publication of application:
26.08.87 Bulletin 87/35

(84) Designated Contracting States:
AT BE CH DE ES FR GB GR IT LI LU NL SE

(71) Applicant: **Craigie Stockwell Carpets Limited**
**24 Whittle Place**
**Irvine Ayrshire(GB)**

(72) Inventor: **Duckworth, Fred**
**Lodge Bush**
**Craigie Kilmarnock(GB)**
Inventor: **Lymburn, William James**
**21 Monach Gardens**
**Dreghorn Irvine(GB)**
Inventor: **French, Stephen**
**4 Johnston's Lane**
**Dundee DD1 5ET(GB)**

(74) Representative: **Pattullo, Norman et al**
**Ian G. Murgitroyd and Company Mitchell**
**House 333 Bath Street**
**Glasgow G2 4ER Scotland(GB)**

(54) Light transfer system.

(57) A light transfer system for use in floor and wall coverings wherein first ends of a plurality of first fibre optic cables are located so as to be visible at an outer face of the covering, the opposite ends of said first fibre optic cables terminating at a junction remote from said outer face of the covering, and a second fibre optic cable terminating at one end at the junction in a manner whereby light is transmitted between the first and second fibre optic cables across the junction.

FIG.1

## Light Transfer System

This invention relates to a light transfer system for use in floor and wall coverings.

Fibre optic cables are used to produce decorative effects in floor and wall coverings such as fabrics, and in particular, in carpets. These effects are produced by leading a number of fibre optic cables, from a common light source, to terminate level with or slightly below the carpet pile and so produce spots of light on the floor surface. The cables ends may be arranged in patterns or may be randomly spaced over the carpet. By providing a variable colour light source, or an audio responsive light source, it is possible to produce dramatic and pleasing lighting effects, over the surface of the fabric.

However, it has been found that, to provide any substantial area of fabric with a sufficient number of fibre optic cable ends to produce a satisfactory effect it is necessary to provide several light sources. Otherwise, the large number of cables leading from the light source occupy such a large volume of space that it is most difficult and inconvenient to conceal the bundle of fibres adjacent or beneath the pile fabrics without providing a specially adapted cable passage.

It is an object of the present invention to obviate or mitigate this disadvantage.

According to the present invention there is provided a light transfer system for use in floor and wall coverings wherein first ends of a plurality of first fibre optic cables are located so as to be visible at an outer face of the covering, the opposite ends of said first fibre optic cables terminating at a junction remote from said outer face of the covering, and a second fibre optic cable terminating at one end at the junction in a manner whereby light is transmitted between the first and second fibre optic cables across the junction.

The junction may be located beneath, or within, the material of the covering which is preferably a fabric.

Preferably, the fabric is in the form of a carpet. The ends of the first fibre optic cables remote from the junction may be located at, or adjacent to, the upper surface of the carpet pile.

Preferably also, the junction is in the form of a block of opaque, non-translucent material having one or more through holes which receive the respective ends of the first and second cables. The block may be cuboidal in shape, and may be of minimal height. The said opposite ends of the first cables may be bundled together in a ferrule which fits within the through hole of the junction.

Preferably also, said opposite ends of the first fibre optic cables are received by a first face of the junction box and said one end of the second fibre optic cable is received by a second face of the junction box.

Preferably also, the fibre optic cables pass between the carpet pile fabric and the carpet backing and thus the fibres are retained in place in the carpet.

Preferably also, the first fibre optic cables and the second fibre optic cable are of different materials such as acrylic material or glass.

As an alternative to a fabric, the covering may be of rigid or semi-rigid material such for example as vinyl, linoleum, rubber or other plastics material. In such a case channels may be formed in the covering to receive the fibre optic cables and the junction.

Light may be transmitted between the first and second fibre optic cables in either direction, depending on the use to which the system is to be put; thus, if a decorative effect is desired a light source is applied to the end of the second fibre optic cable remote from the junction, and the light is transmitted through the second cable, across the junction and through the first cables to appear at the outer face of the covering. On the other hand the system may be used as an alarm mechanism whereby any significant reduction in ambient light levels at the outer face of the covering may signify the presence of smoke or failure of an electric light supply or detect the presence of an intruder; in that case the end of the second fibre optic cable may be adjacent a light detector which triggers an alarm when the light travelling through the system from the first cables falls below a predetermined level.

The system may also be used in a manner which does not require the presence of the junction. In particular the system can provide a track or channel member along which fibre optic cables extend with their outlet ends emerging through the track wall at spaced intervals. The track may be at a similar level to the outer face of a floor covering or above it, and may preferably be formed of rubber or some other rigid or semi-rigid material. This system is intended principally as an indicator of exit routes from buildings, the outlet ends of the fibre optic cables being arranged to show clearly the exit route by transmitting light from a source at their inlet ends. The outlet ends may for example be arranged in arrow formation or in the form of words. The track preferably is provided on the floor, and reflectors may be provided at the outlet ends of the cables to enhance the light clarity.

Embodiments of the present invention will now be described, with reference to the accompanying drawings in which:-

Fig. I is a part cut-away plan view of a light transfer system in accordance with the present invention;

Fig. 2 is a perspective view of a junction box of the system of Fig. I;

Fig. 3 is an end view of a bundle of acrylic fibre optic cables for use in the system of Fig. I;

Fig. 4 is an end view of the junction box shown in Fig. 2;

Fig. 5 is a part cut away plan view of further embodiment of a light transfer system in accordance with the present invention;

Fig. 6 is a longitudinal sectional side view of an alternative system of the present invention;

Fig. 7 is a lateral sectional side view of the system of Fig. 6; and

Fig. 8 is a plan view of the system of Fig. 6.

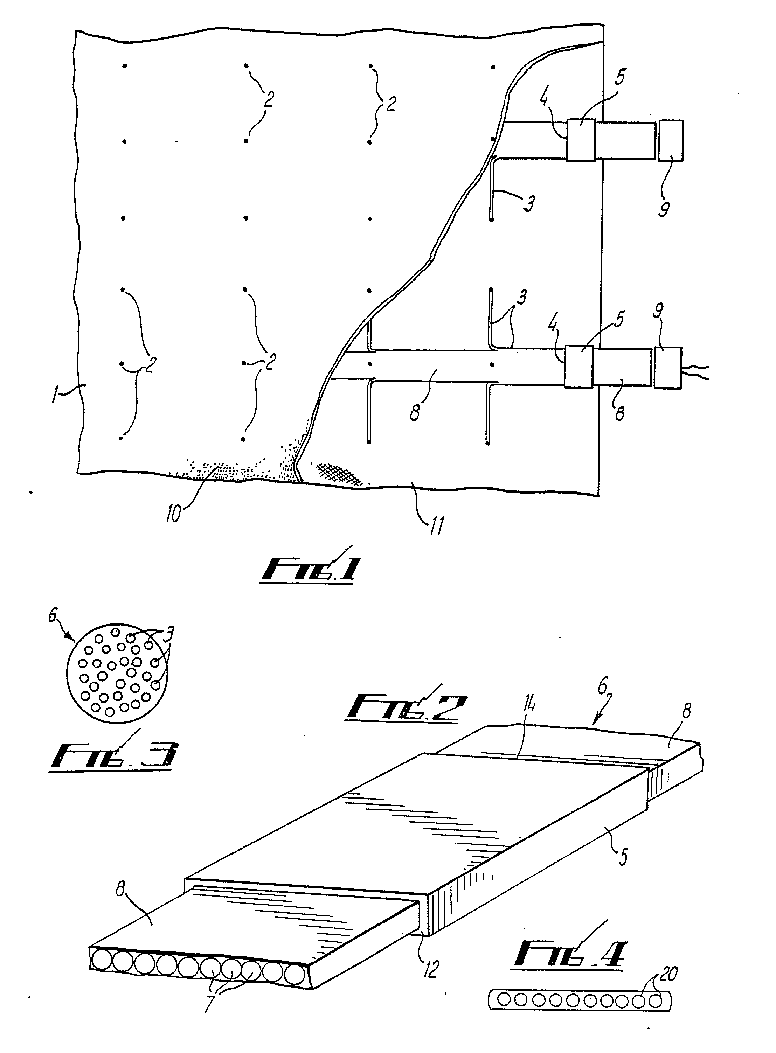

Referring to Figs. I to 3 of the drawings, a decorative fabric comprises a carpet I, the light emitting ends 2 of a plurality of first fibre optic cables 3 being located so as to be visible in the carpet I. The opposite ends 4 of the first fibre optic cables 3 terminate at a junction box 5, and a plurality of second fibre optic cables 7 are provided to supply light to the junction box 5 from a light source 9.

The carpet I is formed from two layers of material I0 and II, the upper layer I0 being in the form of carpet pile and the lower layer II being a latex backing.

The first fibre optic cables 3 which are of acrylic fibre, are arranged to pass between the layers I0 and II of the carpet I, the light emitting ends 2 of the cables 3 passing through the pile layer I0 and terminating adjacent the upper surface of the pile layer I0. In the example shown the light emitting ends 2 are arranged in a grid pattern though in other embodiments different arrangements may be used.

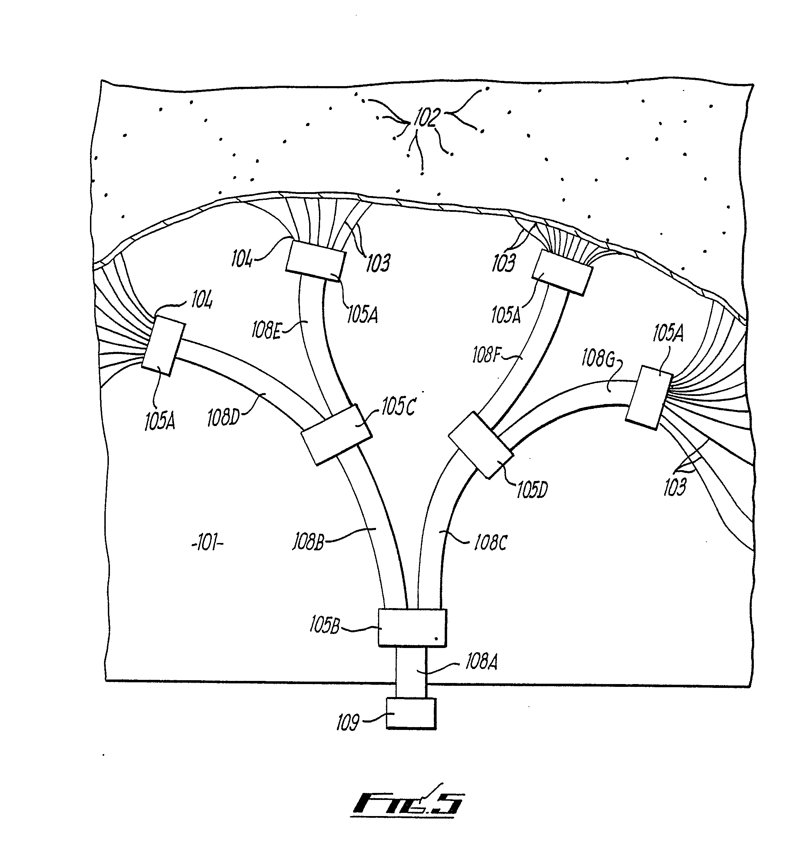

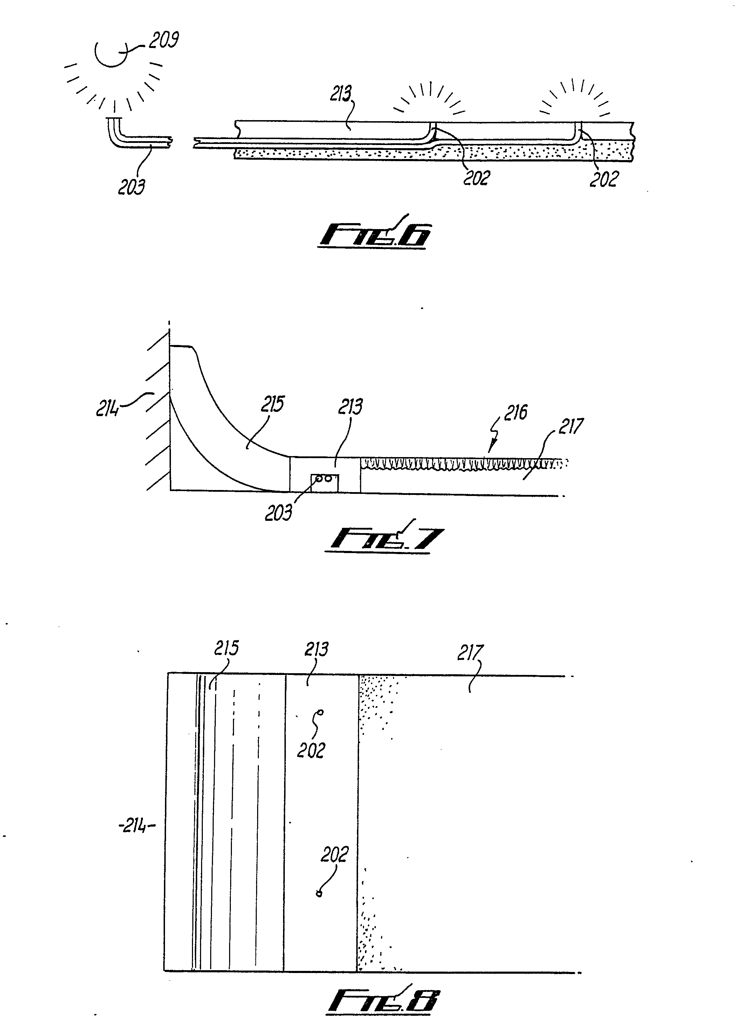

The opposite ends 4 of the first cables 3 terminate within the junction box 5 which is also located between the layers I0 and II of the carpet I. The junction box 5 is in the form of a cuboidal block of black plastics material through which holes 20 (Fig. 4) have been drilled to receive the ends of the cables 3 and 7. The box 5 is approximately 35 $^\times$ 6 $^\times$ 75 mm in size.

Light, produced by a mains or independent powered light source 9, passes through black coated glass fibre optic cables 7 between the layers I0 and II of the carpet I and into the holes 20 through the junction box 5. Within the holes 20 each glass fibre cable 7 is opposed to the end of a respective bundle 6 of thirty acrylic cables 3 having a total cross-sectional area approximately equal to that of the glass fibre cable 7. The first cables 3 lead from the opposite end of the holes 20 of the junction box 5.

When a carpet I of this form is being manufactured the cables 3 and 7 are affixed to the pile layer I0 before the lower latex backing II is applied thus producing a decorative pile fabric having a unified structure.

The light source 9 may produce variable colour effects which provide an attractive and eye-catching pattern in the carpet I.

Harnesses 8 which contain the fibre optic cables 3 and 7 and the junction box 5 are of minimal height so that they may be incorporated into the carpet I without producing irregularities in the carpet I surface.

Thus, the compact nature of the cables 3 and 7 and the junction box 5 permits a single light source 9 to supply a large number of cables 3 with light without the inconvenience of bulky bundles of cables leading from the light source.

In other embodiments of the present invention, the junction box 5 may be provided with a lens or a refracting prism for location between the adjacent ends of the first and second fibre optic cables 3 and 7. Thus, for example, if a refracting prism is provided an input of white light may result in individual colours of the spectrum being produced at the ends 2 of different first cables 3 which obtain light from a common second cable 7.

Now referring to Fig. 5 a further embodiment of a decorative fabric comprises a carpet I0I, the light emitting ends I02 of a plurality of acrylic fibre optic cables I03 being located so as to be visible in the carpet I0I. The opposite ends I04 of the acrylic fibre optic cables I03 terminate at junctions located within junction boxes I05A, and a plurality of glass fibre optic cables, contained within harnesses I08, are provided to supply light to the junction boxes I05A from a light source I09.

From the light source I09 a harness I08A carries glass cables to a junction box I05B, from where two harnesses I08B and I08C carrying glass cables lead to respective junction boxes I05C and I05D. From each junction box I05C or I05D two further harnesses I08D, I08E and I08F, I08G carry glass cables to the junction boxes I05A and thus to the acrylic cables I03.

Referring now to Figs. 6 to 8, a light source 209 provides light to the inlet ends of fibre optic cables 203 which pass along a channel formed by a track member of inverted U-shape. The track member 2I3 is formed by extrusion of black rubber and is apertured at intervals along its length to allow the outlet end portions 202 of the cables 203 to pass upwardly through the track wall to present a visible outlet flush with the outer face of the track member 213.

The track member 213 is disposed adjacent and parallel to a side wall 214 of a room or building, being spaced from the wall 214 by a black rubber coving 215, and leads to an exit of the room or building.

The track member 213 is located along the edge of a floor covering 216 of the room or building, which in the present case is a series of carpet tiles 217, and has a height from the floor which corresponds to the height of the tiles 217; the track member 213 and tiles 217 are therefore flush.

When the light source 209 is actuated the light passes along the cables 203 and emerges at intervals from the outlet ends 202 of the cables at the outer face of the track 203. The black colouration of the track 203 and coving 215 makes the light easily visible in contrast, and the points of light then lead to an exit. The floor mounting of the outlets 202 makes the light easily visible even in the event of the room being smoke-filled, as the floor area of a room is generally the last to be obscured by the smoke.

Modifications and improvements may be incorporated without departing from the scope of the invention.

## Claims

1. A light transfer system for use in floor and wall coverings wherein first ends of a plurality of first fibre optic cables are located so as to be visible at an outer face of the covering, the opposite ends of said first fibre optic cables terminating at a junction remote from said outer face of the covering, and a second fibre optic cable terminating at one end at the junction in a manner whereby light is transmitted between the first and second fibre optic cables across the junction.

2. A light transfer system as claimed in Claim 1, wherein the junction is in the form of an opaque member having a through hole which provides at each end of the through hole a socket for receiving the first cables and second cable respectively.

3. A light transfer system as claimed in Claim 2, wherein the first fibre optic cables are in a bundle at their said opposite ends and the bundle is disposed within one end of the through hole of the opaque member.

4. A light transfer system as claimed in Claim 3, wherein the opaque member has a plurality of through holes each receiving a bundle of first cables and a second cable.

5. A light transfer system as claimed in any one of the preceding Claims, wherein the junction is disposed within the covering below the outer face of the covering.

6. A light transfer system as claimed in any one of the preceding Claims, wherein the first cables are of flexible plastics material and the second cable is of rigid or semi-rigid material.

7. A light transfer system as claimed in Claim 6, wherein the second cable is of glass.

8. A light transfer system as claimed in any one of the preceding Claims, wherein the first cables pass along a channel member and their first ends emerge at the outer face of the covering at intervals along the track.

9. A light transfer system as claimed in any one of the preceding Claims, wherein a light source provides light to said first ends of the first cables and the light emerges from the end of the second cable remote from the junction.

10. A light transfer system as claimed in any one of Claims 1 to 8, wherein a light sensor is disposed at said first ends of the first cables to detect the amplitude of light incident on the end of the second cable remote from the junction and emerging from said first ends of the first cables.

FIG.1

FIG.3

FIG.2

FIG.4

FIG.5

FIG.6

FIG.7

FIG.8